# EUROPEAN PATENT APPLICATION

(11) **EP 2 268 047 A2**
(43) Date of publication of application: **29.12.2010**
(21) Application number: 10165949.8
(22) Date of filing: 15.06.2010
(51) Int. Cl.: H04N 13/00

(54) **Conversion device and method converting a two dimensional image to a three dimensional image**

(30) Priority: 16.06.2009 KR 20090053462
(71) Applicant: Samsung Electronics Co., Ltd., Suwon-si, Gyeonggi-do 442-742 (KR)
(72) Inventor: Kim, Ji Won, 121-783 Seoul (KR); Jung, Yong Ju, 302-120 Daejeon-si (KR); Park, Du-Sik, 443-470 Gyeonggi-do (KR); Baik, Aron, 446-712 Gyeonggi-do (KR); Jeong, Young Ju, 151-775 Seoul (KR)
(74) Representative: Land, Addick Adrianus Gosling

(57) **Abstract**

Disclosed is an image conversion device and method converting a two-dimensional (2D) image into a three-dimensional (3D) image. The image conversion device may selectively adjust illumination within the 2D image, generate a disparity map for the illumination adjusted image, and selectively adjust a depth value of the disparity map based on edge discrimination.

## Description

This application claims the benefit of Korean Patent Application Nos. 10-2009-0053462, filed on June 16, 2009, in the Korean Intellectual Property Office, the disclosure of which is incorporated herein by reference.

One or more embodiments relate to an image conversion device and method that convert a two-dimensional (2D) image into a three-dimensional (3D) image.

Recently, 3D display devices have been developed, and 3D images having realistic 3D effects and realism provided. Accordingly, the demand for 3D content has been continuously increasing.

In general, 2D images based on various viewpoints are typically required to provide a 3D image. However, this scheme may not be available for 2D images previously produced based on a single viewpoint. Accordingly, conversion of the 2D image into a 3D image may enable a next generation display device to utilize previously generated contents that was produced with only one view point.

Techniques for converting 2D image data into 3D image data have previously involved the use of disparity maps, which indicate a disparity between related images, e.g., images captured from respective left and right 2D cameras with a same field of vision. When the disparity between images is low, then the viewed object/point can be inferred to be close to the viewing position, while when the disparity is great, then the viewed object/point can be inferred to be distant from the viewing position. Here, for example, only one image of the left or right images may be relied upon, such that a 3D image can be generated from that one image with a reference to such a disparity map mapping the differences between both images. Equally the depth of each pixel or reference pixels within the select image can be derived from reference to the corresponding/related position in the disparity map. The relationship between the disparity map and a corresponding depth map may thus be linear. Accordingly, with a known disparity map and a corresponding 2D image, the 2D image may be converted into a 3D image. When only a single view point image is available, disparity estimation may also be performed for the single 2D image, where the disparity map is estimated from an analysis of the single 2D image.

According to one or more embodiments, there may be provided an image conversion device, including an illumination adjusting unit to selectively adjust illumination within a two-dimensional (2D) image, and a disparity map generating unit to generate a disparity map for converting the adjusted 2D image into a three-dimensional (3D) image.

According to one or more embodiments, there may be provided an image conversion device, including a disparity map generating unit to generate a disparity map for converting a 2D image into a 3D image, and a depth sharpening unit to selectively adjust depth values within the disparity map to sharpen an object or a boundary of an area which is expressed by the depth values of the disparity map.

According to one or more embodiments, there may be provided an image conversion device, including an illumination adjusting unit to selectively adjust illumination within a 2D image, a disparity map generating unit to generate a disparity map for converting the adjusted 2D image into a 3D image, and a depth sharpening unit to selectively adjust depth values within the disparity map for sharpening an object or a boundary of an area which is expressed by the depth values of the disparity map.

According to one or more embodiments, there may be provided an image conversion method, including selectively adjusting illumination within a 2D image, and generating a disparity map for converting the adjusted 2D image into a 3D image.

According to one or more embodiments, there may be provided an image conversion method, including generating a disparity map for converting a 2D image into a 3D image, and selectively adjusting depth values within the disparity map to sharpen an object or a boundary of an area which is expressed by the depth values of the disparity map.

According to one or more embodiments, there may be provided an image conversion method, including selectively adjusting illumination within a 2D image, generating a disparity map for converting the adjusted 2D image into a 3D image, and selectively adjusting depth values within the disparity map for sharpening an object or a boundary of an area which is expressed by the depth values of the disparity map.

Additional aspects and/or advantages will be set forth in part in the description which follows and, in part, will be apparent from the description, or may be learned by practice of the embodiments.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 illustrates an image conversion device that converts a two-dimensional (2D) image into a three-dimensional (3D) image with illumination adjustment, according to one or more embodiments;
FIG. 2 illustrates an image conversion device that converts a 2D image into a 3D image with depth sharpening, according to one or more embodiments;
FIG. 3 illustrates an image conversion device that converts a 2D image into a 3D image with illumination adjustment and depth sharpening, according to one or more embodiments;
FIG. 4 is a graph for performing tone-mapping, according to one or more embodiments;
FIG. 5 illustrates a process of performing a smoothing filtering by using feature information, according to one or more embodiments;
FIG. 6 illustrates an image conversion method that converts a 2D image into a 3D image with illumination adjustment, according to one or more embodiments;
FIG. 7 illustrates an image conversion method that converts a 2D image into a 3D image with depth sharpening, according to one or more embodiments;
FIG. 8 illustrates a process of adjusting a depth value, such as the depth value adjusting process of FIG. 7, according to one or more embodiments;
FIG. 9 illustrates another process of adjusting a depth value, such as the depth value adjusting process of FIG. 7, according to one or more embodiments; and
FIG. 10 illustrates still another process of adjusting a depth value, such as the depth value adjusting process of FIG. 7, according to one or more embodiments.

### DETAILED DESCRIPTION

Reference will now be made in detail to embodiments, examples of which are illustrated in the accompanying drawings, wherein like reference numerals refer to like elements throughout. In this regard, embodiments of the present invention may be embodied in many different forms and should not be construed as being limited to embodiments set forth herein. Accordingly, embodiments are merely described below, by referring to the figures, to explain aspects of the present invention.

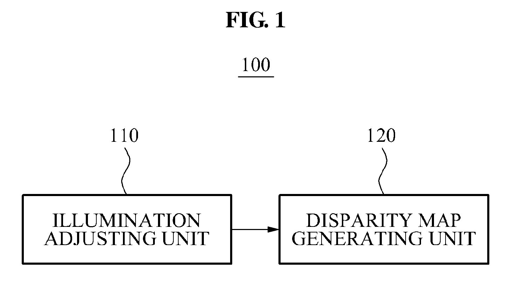

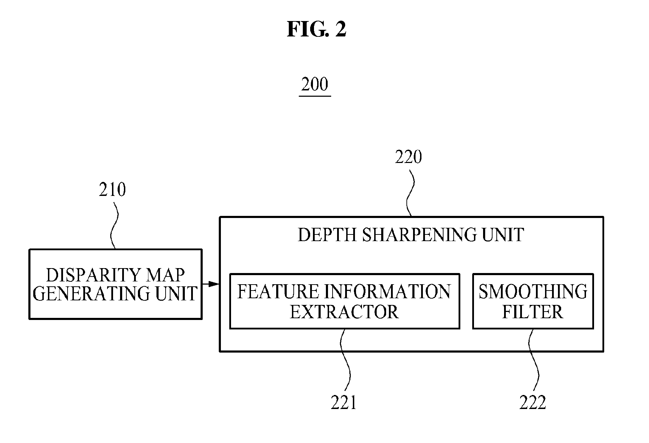

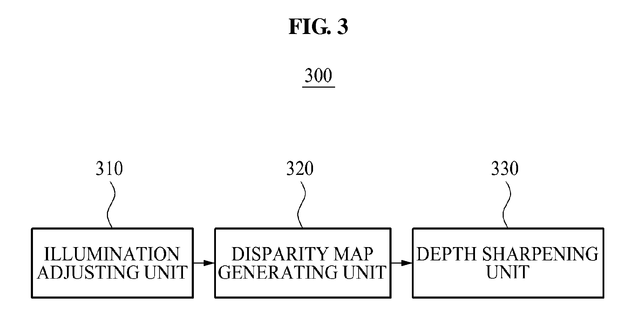

Briefly, FIG. 3 illustrates an image conversion device 300 that converts a 2D image into a 3D image, according to one or more embodiments. Referring to FIG. 3, the image conversion device 300 that converts the 2D image into the 3D image may include an illumination adjusting unit 310, a disparity map generating unit 320, and a depth sharpening unit 330, for example. Further description of FIG. 3, and corresponding embodiments, will be set forth in greater detail below, through a discussion of FIG. 1 showing an illumination adjustment unit and FIG. 2 showing a depth sharpening unit, noting that alternative embodiments are also available. Here, disparity estimation by the disparity map generating unit 320, for example, may be implemented by one or more well known techniques for disparity estimation.

Accordingly, FIG. 1 illustrates an image conversion device 100 that converts a two-dimensional (2D) image into a three-dimensional (3D) image with illumination adjustment, according to one or more embodiments. As noted above, FIG. 1 illustrates an image conversion device 100 that converts 2D image into 3D image with an illumination adjusting unit 110 and a disparity generating unit 120, for example.

With regard to the aforementioned conventional diversity estimation, for example, the present inventors have found that when a disparity map of the 2D image is generated through such disparity estimation, discrimination between objects may deteriorate since depths are incorrectly smoothed in bright or dark areas. Thus, a later rendered 3D effect based on this disparity estimation may represent a lower quality image than desired. For example, the disparity map may not accurately identify differences in disparities/depths between points within the 2D image. To prevent the deterioration of the discrimination, the illumination of the 2D image may be adjusted.

Accordingly, the illumination adjusting unit 110 may selectively adjust illumination within the 2D image that is to be converted into the 3D image. In one embodiment, as only an example, a contrast in a dark area of an original input image may be enhanced and a high contrast in an excessively bright area may be reduced, through such an illumination adjustment. In an embodiment, original colors of objects may be reflected during the disparity estimation by maximally excluding the illumination effect.

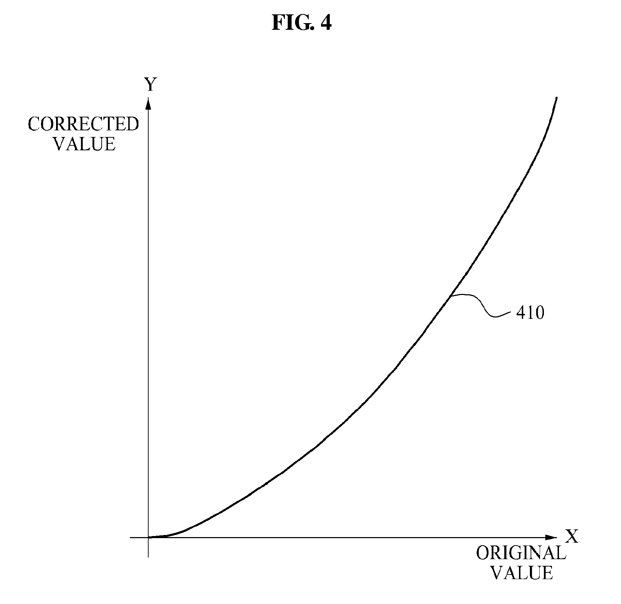

In an embodiment, the illumination adjusting unit 110 may perform tone-mapping of the 2D image by using a lookup table that stores an adjustment illumination value corresponding to an original illumination value. The tone-mapping may be either a global tone mapping that performs mapping with respect to the entire 2D image or a local tone mapping that perform mapping for each part of the 2D image. While global tone mapping may be adequate in cases where an illumination characteristic (descriptive statistics such as mean and variance) is constant across a scene, such a local tone mapping may produce better results if regions having different characteristics are simultaneously present in the scene. Here, local tone mapping may handle all regions adaptively by using different mapping curves in different areas. In an embodiment, the extent of a local area may be either a fixed-size window or a variable window, and areas may further be defined as variable-sized blobs where each blob has a homogenous illumination characteristic, and adjacent blobs do not share the same property. Additionally, as only an example, the lookup table may be at least one of a gamma correction table and a log correction table, where the illumination is reduced to its logarithm. The lookup table will be described in detail with reference to FIG. 4.

FIG. 4 illustrates a graph for performing tone-mapping, according to one or more embodiments.

As illustrated in FIG. 4, an X-axis of a gamma correction graph may indicate an original value, a Y-axis of the gamma correction graph may indicate a corrected value, and the plot 410 of the adjusted value with respect to the original value may be provided as given in FIG. 4.

Referring again to FIG. 1, in an embodiment, when a 2D image is an RGB image, tone-mapping may be performed by using a separate lookup table for each channel of the RGB image. Also, it is possible to apply a single lookup table to all channels.

In addition, the illumination adjusting unit 110 may perform normalization of an intensity value of the 2D image by using at least one of a mean of the intensity of the 2D image and a dispersion of the intensity of the 2D image. The normalization may be performed with respect to each respective part of the 2D image, the entire 2D image, or a combination of the two, for example, and an intensity range may be adjusted by using the normalized intensity value. In an embodiment, an example of the intensity value used for normalization may be a luminance intensity value.

The disparity map generating unit 120 may generate a disparity map for converting the 2D image into a 3D image. In this instance, the above described adjustment of the illumination may be performed at the same time of the generation of the disparity map or prior to the generation of the disparity map. As described above, the illumination of the 2D image may be adjusted at the time of the generation of the disparity map or prior to the generation of the disparity map, and thus, there may be provided the image conversion device that converts the 2D image into the 3D image and increases discrimination between objects even in bright or dark areas.

As noted above, FIG. 2 illustrates an image conversion device 200 that converts a 2D image into a 3D image with depth sharpening, according to one or more embodiments. Referring to FIG. 2, the image conversion device 200 may include a disparity map generating unit 210 and a depth sharpening unit 220, for example.

The disparity map generating unit 210 may generate a disparity map for converting the 2D image into the 3D image.

Similar to the above problems with current 2D to 3D conversion using disparity maps, the inventors have additionally found that an inconsistency may occur between an image edge area and an edge area of the corresponding disparity map. For example, when an object and background exist in the image, a disparity difference between an area corresponding to the object and an area corresponding to the background in the disparity map may need to be distinctive to maximize the 3D effect. However, a correlation between the image and the disparity map may be insufficient, and thus, the 3D effect may frequently be deteriorated.

Accordingly, in one or more embodiments, the depth sharpening unit 220 may selectively adjust depth values within the disparity map. That is, the sharpening unit 220 may perform sharpening of a boundary between depths of the disparity map, thereby enabling a user to experience a maximum 3D effect when the user views the 3D image. A depth sharpening filter may be used for adjusting the depth value. In addition, it may be desirable to use a depth sharpening filter designed for performing edge preserving, to clearly represent a boundary between the objects. When an edge is appropriately preserved, the boundary between the objects may be distinctive.

The adjustment for the depth sharpening may use a method of grouping depth values of the disparity map into at least one group and smoothing depth values of the at least one group. That is, areas having a similar depth in the disparity map may be grouped into a same group, and smoothing performed with respect to the same group to have a similar depth value, whereas the smoothing may not be performed in areas having different depths, thereby clearly representing boundaries between objects, a boundary between an object and a background, and the like. Such a similarity may be determined by a thresholding process, e.g., if a difference between depth values is above some selected threshold, then the two areas are not similar. Here, such a threshold could be experimentally determined or user defined.

The adjustment for the depth sharpening may perform smoothing of a depth value of a similar area of the depth map by using a bilateral filter. Here, the bilateral filter may be a filter that maintains lines of an image to be clear and smoothes depth values of similar areas. The similar areas may be areas having a similar depth value, and each object included in the image may be a single similar area.

The adjustment for the depth sharpening may compare the 2D image with the disparity map and may adjust the depth value of the disparity map. To achieve this, the 2D image is compared with the disparity map, and areas of the 2D image may be classified into boundary areas and a non-boundary areas. A depth value of the disparity map corresponding to a non-boundary area may be smoothed by using a cross (joint) bilateral filter, for example. That is, the 2D image may be used as a basis image, and based on the 2D image, a boundary between the lines of the disparity map may be clearly maintained while areas that are similar may be smoothed. In other words, similar areas in the 2D image may be made to have similar depth values in the disparity map, a different area (a boundary between the objects or a boundary between the object and the background) may not be smoothed, or smoothed as much, for example.

The depth sharpening unit 220 may include a feature information extractor 221 and a smoothing filter unit 222. The feature information extractor 221 may extract at least one feature information from the 2D image. The feature image information may include information of at least one of a color, a luminance, an orientation, a texture, and a motion, for example.

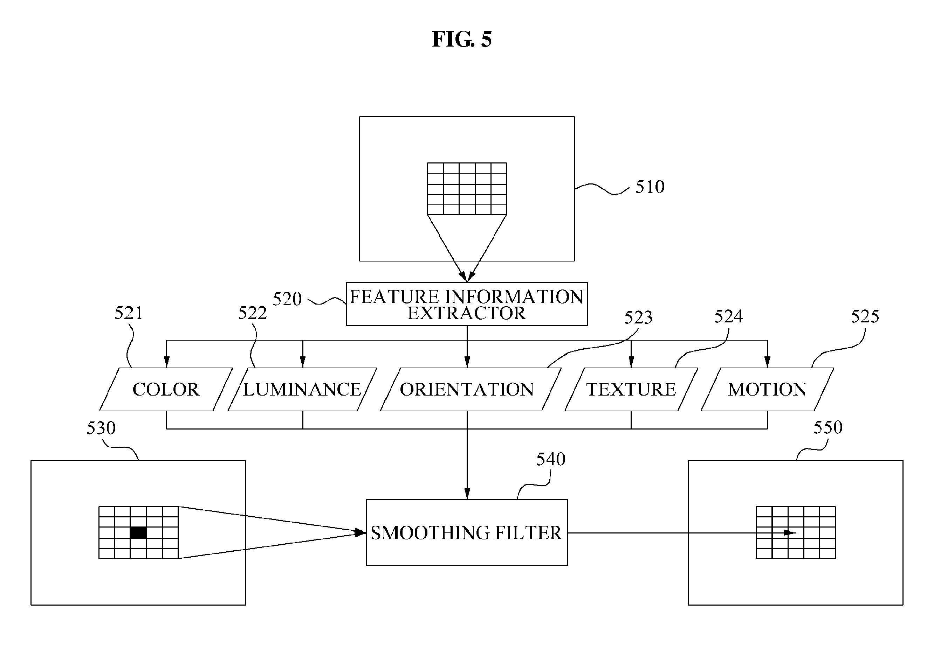

The smoothing filter unit 222 may perform smoothing while preserving a high frequency edge by using the depth value of the disparity map and at least one feature information extracted from the feature information extractor. As an example, information about a boundary of the 2D image may be extracted from the extracted feature information, and an edge of the 2D image may be preserved by using the information about a boundary. Such a smoothing filter unit 222 may also be referred to as the cross (joint) bilateral filter, when two such distinct affects are instituted. Here, adjustment of the depth value performed by using the feature information will be described in greater detail with reference to FIG. 5.

FIG. 5 illustrates a process of performing a smoothing filtering by using feature information, according to one or more embodiments.

Referring to FIG. 5, the feature extractor 520 may extract at least one feature information of a 2D image 510 corresponding to an area of a corresponding disparity map 530 to be filtered, to perform filtering of the area of the disparity map. Subsequently, a pixel value to fill the new disparity map 550 may be calculated through a smoothing filter based on at least one feature information 521, 522, 523, 524, and 525 related to depth values of the existing disparity map 530. Here, as only examples, such feature information may include the color information 521, luminance information 522, orientation information 523, texture information 524, and/or motion information 525, noting that alternative features may equally be available.

As noted, the smoothing filter may be a nonlinear edge-preserving smoothing filter. The smoothing filter may perform smoothing for preserving a high frequency area by simultaneously applying a Gaussian Kernel to a pixel value of the existing disparity map and the at least one feature information.

Referring again to FIG. 2, the adjustment of the depth value may be performed after the new disparity is generated or at the same time when the new disparity map is generated.

As described above, the disparity map is adjusted for converting the 2D image into the 3D image, thereby clearly sharpening a boundary between objects.

As noted, FIG. 3 illustrates an image conversion device 300 that converts a 2D image into a 3D image, according to one or more embodiments.

Here, the image conversion device 300 that converts the 2D image into the 3D image may include the illumination adjusting unit 310, the disparity map generating unit 320, and the depth sharpening unit 330, for example. In an embodiment, for example, an RGB frame may be input to the image conversion device 300, illumination adjustment may be performed by the illumination adjusting unit 310 on the RGB frame, disparity estimation may then be performed by the disparity map generating unit 320 based on the illumination adjusted RGB frame, and the RGB frame plus the estimated disparity may be provided to the depth sharpening unit 330 for depth sharpening, resulting in the generation of a final disparity map after the depth sharpening. The final disparity map and the 2D image may then be output as the 3D data and/or used to generate the 3D image, in one or more embodiments. Thus, the illumination adjusting unit 310 may selectively adjust illumination within a 2D image. That is, the illumination of the 2D image may be selectively adjusted to complement lowering of discrimination between objects in one or more bright or dark areas. The disparity map generating unit 320 may generate a disparity map for converting the 2D image into the 3D image. The depth sharpening unit 330 may selectively adjust depth values within the disparity map. That is, the depth values of the disparity map may be selectively adjusted to more clearly represent edges.

The adjustment of the illumination and the adjustment of the depth value may be performed when the disparity map is generated. As another example, the adjustment of the illumination may be performed before the disparity map is generated, and also the adjustment of the depth value may be performed after the disparity is generated.

Descriptions of the illumination adjusting unit 310, the disparity generating unit 320, and the depth sharpening unit 330 which may be similar to the descriptions of the illumination adjusting unit 110, the disparity generating unit 120, and the depth sharpening unit 220 described with reference to FIGS. 1 and 2 will be further omitted.

The image conversion device that performs conversion of a 2D image into a 3D image and performs at least one of the adjustment of the illumination and the adjustment of the depth value may further be a 3D Stereoscopic display, a 3D Stereoscopic TV, a 3D multi-view display, a 3D multi-view TV, a 3D Stereoscopic broadcasting device, a 3D media player, a game console, a TV settop box, PC software, a PC graphics card, and the like. Further, the image conversion device may be an apparatus that includes hardware, such as one or more processing devices to implement one or more of the described aspects.

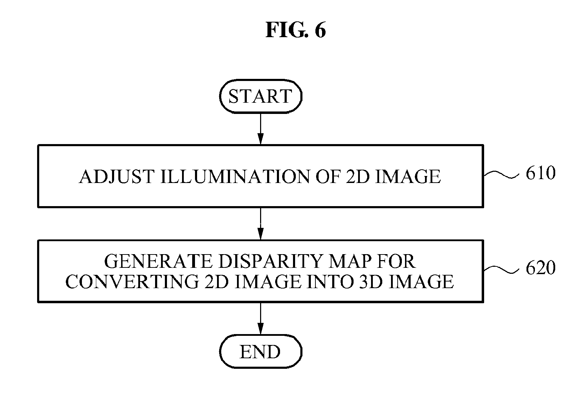

FIG. 6 illustrates an image conversion method that converts a 2D image into a 3D image with illumination adjustment, according to one or more embodiments.

Referring to FIG. 6, illumination within the 2D image may be selectively adjusted, in operation 610. That is, as noted above, conventional discrimination between objects may be lowered in dark areas, for example, due to poor contrast when a disparity map is generated, and a depth of the dark area may be smoothed, and thus, a 3D effect may be lowered. Accordingly, to avoid this, an illumination of at least one area within the 2D image may be selectively adjusted. The adjustment may be made by tracing at least one of a direction of a light and an intensity of a light with respect to the at least one area.

The 2D image may be tone-mapped by using a lookup table to adjust the illumination, the tone mapping being either a global tone mapping or a local tone mapping. Also, when the 2D image is an RGB image, the tone mapping may be performed by using a separate lookup table for each channel of the RGB image. In addition, when the illumination is adjusted, an intensity value of the 2D image may be normalized by using at least one of a mean of the intensity value of the 2D image and a dispersion of the intensity of the 2D image, the normalization being performed for each part of the 2D image or for the entire the 2D image.

In operation 620, the disparity map may be generated for converting the adjusted 2D image into the 3D image.

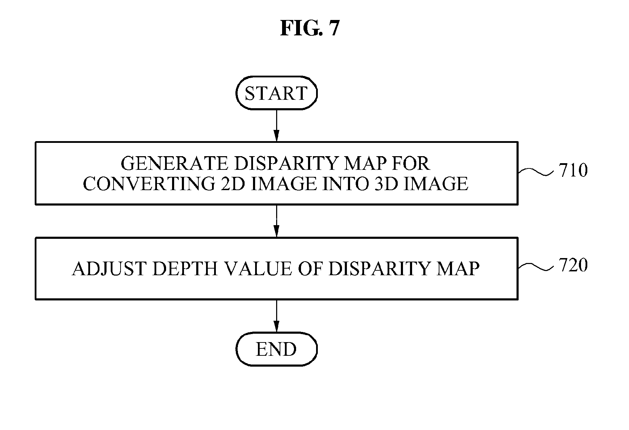

FIG. 7 illustrates an image conversion method that converts a 2D image into a 3D image with depth sharpening, according to one or more embodiments.

Referring to FIG. 7, a disparity map may be generated for converting the 2D image into the 3D image, in operation 710.

In operation 720, depth values within the disparity map may be selectively adjusted for sharpening an object of a boundary of an area, which is expressed by a depth value of the disparity map. A bilateral filter or a cross bilateral filter, which may maintain lines of an image to be clear and while smoothing values of similar areas, may be used for adjusting the depth value. When the bilateral filter or the cross bilateral filter are used, an exact computation may be performed. However, to reduce an operation speed or an amount of use of a memory, an approximation, instead of the exact computation, may be performed.

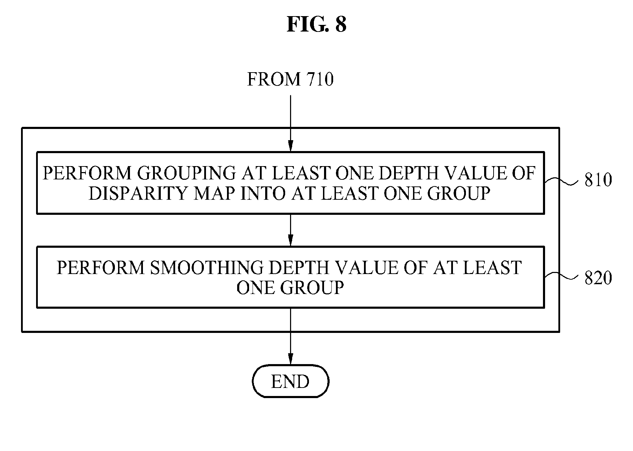

FIG. 8 illustrates a process of adjusting a depth value, such as the depth value adjusting process of FIG. 7, according to one or more embodiments.

Referring to FIG. 8, a depth value of the disparity map may be grouped into at least one group, in operation 810. That is, the at least one group may be generated by grouping areas within the disparity map having similar depth values.

In operation 820, a depth value of the at least one group may be selectively smoothed in operation 820. That is, the depth value of the at least one group are smoothed, and thus, a depth value between the groups may be clearly discriminated. Accordingly, a boundary between objects, a boundary between an object and a background, and the like may become clear.

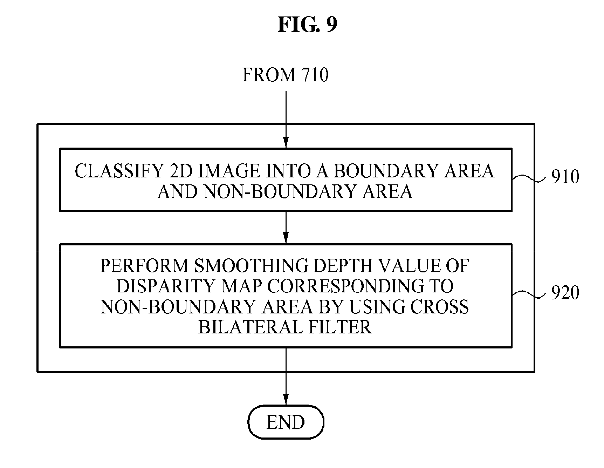

FIG. 9 illustrates another process of adjusting a depth value, such as the depth value adjusting process of FIG. 7, according to one or more embodiments.

Referring to FIG. 9, a 2D image may be classified into boundary areas and non-boundary areas. That is, an area including a boundary area between objects, a boundary between an object and a background, and the like, of the 2D image may be classified as a boundary area, and remaining areas of the 2D image may be classified as the non-boundary areas.

In operation 920, depth values of a disparity map corresponding to the non-boundary areas may be selectively smoothed by using a cross bilateral filter that may not smooth the boundary areas. Accordingly, a depth value of the non-boundary area is smoothed and a depth value of the boundary area is not smoothed, and thus, a boundary may be clear. That is, a line boundary of the disparity map may be clear by using the 2D image as a basis image.

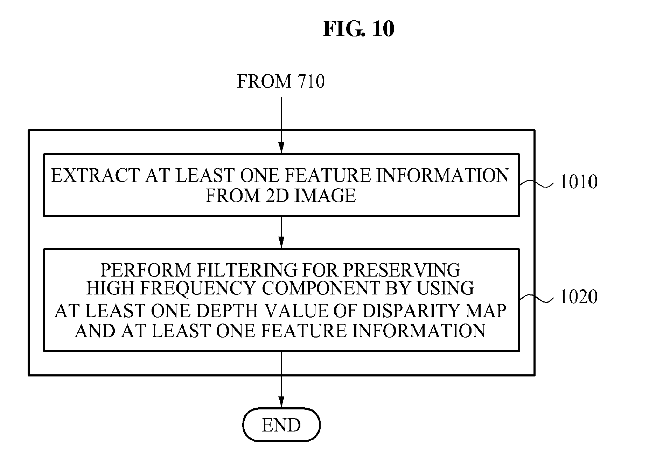

FIG. 10 illustrates still another process of adjusting a depth value, such as the depth value adjusting process of FIG. 7, according to one or more embodiments.

Referring to FIG. 10, at least one feature information may be extracted from a 2D image, in operation 1010. Here, the feature information may include at least one of color information, luminance information, orientation information, texture information, and motion information, for example.

In operation 1020, filtering for preserving a high frequency edge may be selectively performed based on depth values of the disparity map and at least one feature information. That is, boundary information may be extracted from the feature information, and areas having similar depth values may be smoothed based on the boundary information. In addition, areas having different depth values may not be smoothed. In this instance, one or more areas having similar depth values may be a single object or a single background, for example.

As described above, illumination within the 2D image may be selectively adjusted for converting the 2D image into the 3D image, and thus, discrimination with respect to an object may increase regardless of a direction of a light of the 2D image or an intensity of a light of the 2D image. Further, depth values within a disparity map may be selectively adjusted for converting the 2D image into the 3D image, and a boundary between objects, a boundary between an object and a background, and the like may be become clear. Accordingly, a 3D effect may be provided. Additionally, as note above, the selective illumination adjustment and the selective depth value adjustment may be both performed, and further the two adjustments could be performed simultaneously, e.g., in a one-pass scan of images instead of performing separate scans for each task.

In addition to the above described embodiments, embodiments can also be implemented through computer readable code/instructions in/on a non-transitory medium, e.g., a computer-readable medium, to control at least one processing device, such as a processor or computer, to implement any above described embodiment. The medium can correspond to any defined, measurable, and tangible structure permitting the storing and/or transmission of the computer readable code. Accordingly, in one or more embodiments, the computer-readable medium may include computer readable code to control at least one processing device to implement an image conversion method that converts the 2D image into the 3D image. As another example, the processing device may be programmable computer.

The media may also include, e.g., in combination with the computer readable code, data files, data structures, and the like. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. Examples of computer readable code include both machine code, such as produced by a compiler, and files containing higher level code that may be executed by the computer using an interpreter, for example. The media may also be a distributed network, so that the computer readable code is stored and executed in a distributed fashion. Still further, as only an example, the processing element could include a processor or a computer processor, and processing elements may be distributed and/or included in a single device.

While aspects of the present invention has been particularly shown and described with reference to differing embodiments thereof, it should be understood that these embodiments should be considered in a descriptive sense only and not for purposes of limitation. Descriptions of features or aspects within each embodiment should typically be considered as available for other similar features or aspects in the remaining embodiments.

Thus, although a few embodiments have been shown and described, with additional embodiments being equally available, it would be appreciated by those skilled in the art that changes may be made in these embodiments without departing from the principles and spirit of the invention, the scope of which is defined in the claims and their equivalents.

## Claims

1. An image conversion device, comprising:
an illumination adjusting unit to selectively adjust illumination within a two-dimensional (2D) image; and
a disparity map generating unit to generate a disparity map for converting the adjusted 2D image into a three-dimensional (3D) image.

2. The device of claim 1, further comprising:
a depth sharpening unit to selectively adjust depth values within the disparity map for sharpening an object or a boundary of an area which is expressed by the depth values of the disparity map.

3. The device of any one of claims 1 or 2, wherein the illumination adjusting unit performs tone-mapping of the 2D image by using a lookup table that stores an adjustment illumination value corresponding to an original illumination value, the tone mapping being performed with respect to each part of the 2D image or the 2D image in entirety.

4. The device of claim 3, wherein the illumination adjusting unit performs tone-mapping of an RGB image of the 2D image by using a separate lookup table for each channel of the RGB image.

5. The device of claim 3 or 4, wherein the lookup table includes at least one of a gamma correction table and a log correction table.

6. The device of any one of claims 1 -5, wherein the illumination adjusting unit performs normalization of at least one luminance intensity value of the 2D image by using at least one of a mean of a luminance intensity value of the 2D image and a dispersion of the luminance intensity value of the 2D image, the normalization being performed with respect to each part of the 2D image or the 2D image in entirety.

7. An image conversion device, comprising:
a disparity map generating unit to generate a disparity map for converting a 2D image into a 3D image; and
a depth sharpening unit to selectively adjust depth values within the disparity map to sharpen an object or a boundary of an area which is expressed by the depth values of the disparity map.

8. The device of any one of claims 2 -7, wherein the depth sharpening unit smoothes a depth value corresponding to the object or the area which are expressed by the depth values of the disparity map, by using a bilateral filter.

9. The device of any one of claims 2 -7, wherein the depth sharpening unit compares the 2D image with the disparity map and adjusts a depth value of the disparity map based on the comparison.

10. The device of any one of claims 2 -7, wherein the depth sharpening unit classifies the 2D image into a boundary area and a non-boundary area, and selectively smoothes a depth value of the disparity map corresponding to the non-boundary area compared to the boundary area by using a cross bilateral filter.

11. The device of any one of claims 2 -7, wherein the depth sharpening unit further comprises:
a feature information extractor to extract, from the 2D image, feature information including information of at least one of color, luminance, orientation, texture, and motion with respect to the 2D image; and
a smoothing filter to perform selectively filtering within the disparity map for preserving a high frequency edge by using the depth value of the disparity map and at least one extracted feature information.

12. An image conversion method, comprising:
selectively adjusting illumination within a 2D image; and
generating a disparity map for converting the adjusted 2D image into a 3D image.

13. The method of claim 12, further comprising:
selectively adjusting depth values within the disparity map for sharpening an object or a boundary of an area which is expressed by the depth values of the disparity map.

14. An image conversion method, comprising:
generating a disparity map for converting a 2D image into a 3D image; and
selectively adjusting depth values within the disparity map to sharpen an object or a boundary of an area which is expressed by the depth values of the disparity map.

15. A non-transitory computer readable recording media comprising computer readable code to control at least one processing device to implement the method of any one of claims 12, 13 or 14.
